# EUROPÄISCHE PATENTSCHRIFT

(11) **EP 2 304 356 B1**
(45) Veröffentlichungstag und Bekanntmachung des Hinweises auf die Patenterteilung: **07.07.2021**
(21) Anmeldenummer: 09757487.5
(22) Anmeldetag: 29.05.2009
(51) Int. Cl.: F25D 23/06

(54) **HAUSHALTSGERÄT, INSBESONDERE KÄLTEGERÄT**
DOMESTIC APPLIANCE IN PARTICULAR REFRIGERATOR
APPAREIL MENAGER, EN PARTICULIER APPAREIL FRIGORIFIQUE

(30) Priorität: 03.06.2008 DE 102008026529
(43) Veröffentlichungstag der Anmeldung: 06.04.2011
(73) Patentinhaber: BSH Hausgeräte GmbH, 81739 München (DE)
(72) Erfinder: SCHILK, Andreas, 89520 Heidenheim (DE); STELZER, Jörg, 89537 Giengen (DE)
(86) Internationale Anmeldenummer: PCT/EP2009/056648
(87) Internationale Veröffentlichungsnummer: WO 2009/147106

(56) Entgegenhaltungen:
- EP-A- 0 503 755
- WO-A-2004/001149
- DE-A1- 19 915 311
- JP-A- 4 260 780
- JP-A- 2003 106 761
- JP-A- 2005 299 972
- US-A- 4 743 672
- None

## Beschreibung

Die vorliegende Erfindung betrifft ein Haushaltsgerät, insbesondere Kältegerät, aufweisend einen Korpus mit einem Innenbehälter und Geräteaußenwänden, sowie einer dazwischen liegenden Isolationsschicht mit mindestens einem eingelagerten Vakuumisolationspaneel.

Aus der DE 296 13 093 U1 ist ein fixiertes Vakuumisolierpaneel sowie ein dieses fixierte Vakuumisolierpaneel enthaltendes Kühlmöbelelement bekannt. Die dortige Anordnung, besteht aus einer starren Platte und einem Vakuumisolierpaneel, wobei das Vakuumisolierpaneel durch einen als flüssiges Reaktionsgemisch aufgebrachten PolyurethanSchaum auf der starren Platte fixiert ist. Zur Fixierung wird ein Vakuumisolierpaneel mittig zentriert in eine Stahlkassette, die mit einem umgefalzten Rand versehen ist, eingelegt. Ein umlaufender Spalt zwischen Stahlkassette und Vakuumisolierpaneel wird mit Polyurethan-Einkomponentenschaum ausgefüllt. Alternativ wird dort vorgeschlagen, das Vakuumisolierpaneel mit einer Aluminiumplatte zu verbinden, auf der Aluminiumrohre schlangenförmig aufgeschweißt sind. Auf die Blechseite, auf der die Rohre aufgeschweißt sind, wird ein Polyurethan-Reaktionsgemisch aufgebracht. Während des Aufschäumvorganges wird das Vakuumisolierpaneel auf das aufsteigende Reaktionsgemisch aufgelegt. Nach dem Aushärten des Schaumes hat die mit den Aluminiumrohren belegte Platte sich fest mit dem Vakuumisolierpaneel verbunden.

Aus der JP 4 260780 A ist eine Isolierbox bekannt. Eine Vakuumisolierplatte ist mit einer Oberfläche direkt mit einer Innenfläche eines Außenkastens der Isolierbox mit einem Zwei-Flüssig-Hauptmittel-Typ-Klebstoff verklebt. Eine weitere gegenüberliegende Oberfläche der Vakuumisolierplatte ist gleichzeitig direkt mit einer Außenfläche eines Innenkastens der Isolierbox mit einem entsprechenden Klebstoff verklebt.

JP 2005 299972 offenbart ein Kältegerät mit einem Korpus und mit einem Vakuumisolationspanel, welches in eine U-förmige, der Querschnittsgestalt des Korpus entsprechende Form gebogen ist.

Aufgabe der Erfindung ist es, gattungsgemäße Haushaltsgeräte, insbesondere Kältegeräte, in hoher Qualität kostengünstig herstellen zu können.

Die Aufgabe wird durch ein Haushaltsgerät, insbesondere Kältegerät, mit den Merkmalen des Anspruchs 1 gelöst.

Indem das mindestens eine Vakuumisolationspaneel mittels eines Zweikomponenten-Klebstoffes flächig an einer Innenseite einer Geräteaußenwand oder mindestens an einer der Wärmeisolation des Gerätes zugewandten Außenwandseite des Innenbehälters angeklebt ist, können aufwendige Befestigungsmittel entfallen und gleichzeitig insbesondere eine Ebenmäßigkeit der Geräteaußenwände gewährleistet werden. Vorzugsweise betrifft die Erfindung Kältegeräte, sie kann jedoch auch bei anderen Haushaltsgeräten, wie beispielsweise Klimageräten, eingesetzt werden, welche Vakuumisolationspaneelen verwenden.

Als Vakuumisolationspaneele werden Wärmedammplatten verstanden, die durch Evakuieren eines Körperhohlraumes eine reduzierte Wärmeleitfähigkeit aufweisen. Generell umfassen Vakuumisolationspaneele eine Hülle, die eine hohe Dichtigkeit gegen Gasdurchtritt aufweist. Die Hülle wird mit porösen Kernmaterial gefüllt. Das Kernmaterial bildet nach dem Evakuieren der Hülle einen festen Stützkörper. Üblicherweise wird zur Erzielung eines möglichst geringen Restgasgehaltes ein offenporiges Kernmaterial verwendet, aus dem enthaltene Gase möglichst vollständig heraus evakuiert werden können. Die hohe wärmeisolierende Wirkung der Vakuumisolationspaneele wird überwiegend durch das Evakuieren erreicht. Daneben soll der Stützkörper einer Vakuumdämmplatte eine möglichst kleine Festkörper- und Strahlungswärmeleitfähigkeit aufweisen. Verschiedene Materialarten sind in dieser Hinsicht als Stützkörper für die Herstellung von Vakuumdämmplatten geeignet. So können beispielsweise mikroporöse Kieselsäuren, insbesondere pyrogene Kieselsäuren und Perlite, aber auch Mikro-/Cellulose-Fasermaterialien oder offenporige Kunststoffschäume verwendet werden. Eine weitere Anforderung an das Material für den Stützkörper und insbesondere für deren Formbeständigkeit ist die Druckbelastbarkeit. Mit zunehmender Evakuierung steigt nämlich die Druckbelastung von Außen auf die Hülle des Vakuumisolationspaneels aufgrund des Umgebungsluftdruckes. Dieser Druckbelastung sollte das Stützkörpermaterial standhalten können. Die Wärmeisolationsbeständigkeit hängt im wesentlichen von der Gas- und Wasserdampfsperrfähigkeit der Hülle ab. Gas oder Wasserdampf, der durch die Hülle hindurch diffundiert, reduziert das Vakuum in dem Vakuumisolationspaneel, wodurch die wärmeisolierende Wirkung verloren ginge. Üblicherweise werden deshalb Aluminiumverbundfolien als Hülle verwendet. Wegen der hohen Wärmeleitfähigkeit von Aluminium sollten möglichst dünne Aluminiumschichten vorgesehen werden. Die Aluminiumschicht dient im wesentlichen dazu Wärmestrahlung zu reflektieren. Die Gas- und Wasserdampfsperrfähigkeit wird überwiegend durch Kunststoffschichten erzielt. Die Kunststoffschichten sollen auch eine sehr hohe Materialfestigkeit aufweisen, so dass mechanische Beschädigungen möglichst nicht auftreten, die ein Eindringen von Luft in das Innere des Vakuumisolationspaneel zur Folge hätten und dadurch die wärmeisolierende Wirkung in diesem belüfteten Zustand verloren ginge. Im allgemeinen werden Vakuumisolationspaneele in vorzugsweise rechteckiger Plattenform hergestellt.

Während des Evakuierens eines Vakuumisolationspaneels legt sich die Hülle mitunter nicht völlig ebenmäßig an den Stützkörper an, so dass es zur Bildung von Falten der Hülle kommen kann. Im Ergebnis führt dies zu unebenen Vakuumisolationspaneelen. Daneben kann es insbesondere bei schüttgutartigen Kernmaterialien zu Unebenheiten des durch das Evakuieren gebildeten Stützkörpers kommen. Auch dies führt zu unebenen Vakuumisolationspaneelen. Problematisch an einer Unebenheit des Vakuumisolationspaneels ist es, dass im Zuge der fertigungstechnischen Befestigung des Vakuumisolationspaneels an der Innenseite einer Geräteaußenwand die Unebenheit des Vakuumisolationspaneels sich auf der sichtbaren Außenseite der Geräteaußenwand abzeichnen können oder es aufgrund der Unebenheit des Vakuumisolationspaneels zu Spannungen in der Geräteaußenwand kommt, was zu einem unebenen und insbesondere welligen Erscheinungsbild der Geräteaußenwand führt.

Um die Qualität des Kältegerätes zu steigern, soll nicht nur sichergestellt sein, dass das Erscheinungsbild der Geräteaußenwand oder des Innenbehälters optisch einwandfrei ist, sondern das Kältegerät soll auch kostengünstig herstellbar und dann auch energieeffizient zu betreiben sein. Im Stand der Technik kann zwar durch ein zwischen Vakuumisolationspaneel und Geräteaußenwand eingelegtes zusätzliches Blech das optische Erscheinungsbild verbessern, das Einlegen eines zusätzlichen Bleches erhöht jedoch die Herstellkosten und das Gewicht des fertigen Kältegerätes. Gleiches gilt für Lösungen, bei denen statt eines zusätzlich eingelegten Bleches die Geräteaußenwand deutlich dicker ausgeführt wird. Teilweise werden die Vakuumisolationspaneele auch in Metallkassetten eingefügt und die Metallkassette an der Geräteaußenwand befestigt. Bei einer Befestigung des Vakuumisolationspaneels oder der Metallkassette durch eine rahmenartig umlaufende Polyurethanschaum-Kleberaupe kommt es zu Lufteinschlüssen zwischen Vakuumisolationspaneel und Geräteaußenwand. Aufgrund der hohen Anforderungen an die Energieeffizienz und damit an die Isolierleistung von modernen Kältegeräten, sollen Lufteinschlüsse, welche Wärmebrücken darstellen, verhindert bzw. weitgehend vermieden werden. Lufteinschlüsse können insbesondere dadurch verhindert bzw. weitgehend vermieden werden, wenn das Vakuumisolationspaneel mittels eines ZweikomponentenKlebstoffes an einer Innenseite einer Geräteaußenwand oder an der Außenseite einer Wand des Innenbehälters flächig angeklebt wird. Durch die zwischen Vakuumisolationspaneel und Innenseite der Geräteaußenwand bzw. zwischen Außenseite des Innenbehälters und dem Vakuumisolationspaneel eingebrachte Zweikomponenten-Klebstoffschicht wird nicht nur das Vakuumisolationspaneel mit der Geräteaußenwand bzw. mit dem Innenbehälter adhesiv verbunden, sondern gleichzeitig eine Zwischenschicht geschaffen, welche Unebenheiten ausgleicht, wie sie beispielsweise durch Falten in der Hülle des Vakuumisolationspaneels oder durch Anforderungen am Innenbehälter, z.B. durch Tragrippen, vorgegeben sind. Unebenheiten können jedoch nicht nur von Falten in der Hülle entstehen, sondern beispielsweise dann, wenn zwei oder mehrere starre Stützkörperbauteile in einer gemeinsamen Hülle evakuiert werden. Dabei kann es durch Lageungenauigkeiten zweier Stützkörperbauteile zueinander zu stufenartigen Kanten in der Fläche des Vakuumisolationspaneels kommen, die sich nach dem Evakuieren an der Außenseite der Hülle darstellen.

Durch das flächige Ankleben der Vakuumisolationspaneele an die Innenseiten der Geräteaußenwände oder der Außenseite der Wände des Innenbehälters ergibt sich eine Material- und Kosteneinsparung. Bei den Geräteaußenwänden kann dabei auf zusätzliche Versteifungsbleche oder dickere Geräteaußenwände verzichtet werden. Die erfindungsgemäße Klebeschicht zwischen Vakuumisolationspaneel und Geräteaußenwand ergibt ein geringeres Gewicht für das Haushaltsgerät als bei Verwendung von zusätzlichen Versteifungsblechen oder dickeren Geräteaußenwänden. Die Klebeschicht bewirkt einen Ausgleich von Unebenheiten zwischen Vakuumisolationspaneel und Geräteaußenwand bzw. zwischen Innenbehälter und Vakuumisolationspaneel. So können auch sehr unebene, mit unter auch kostengünstigere Vakuumisolationspaneele verarbeitet werden. Durch die Verhinderung von Lufteinschlüssen erhöht sich die Energieeffizienz des Haushaltsgeräts.

Der Zweikomponenten-Klebstoff kann sich vollflächig zwischen Vakuumisolationspaneel und Innenseite der Geräteaußenwand oder zwischen der Außenseite des Innenbehälters und dem Vakuumisolationspaneel erstrecken.

Der Zweikomponenten-Klebstoff kann vorzugsweise eine Schicht mit einer Schichtdicke von 0,4 mm bis 8 mm vorzugsweise 3 mm bilden.

Der Zweikomponenten-Klebstoff kann ein Polykondensationsklebstoff sein, insbesondere aus der Gruppe der Phenolformaldehydklebstoffe, Silikonklebstoffe, Silan-vernetzende Polymerklebstoffe oder Polyimidklebstoffe.

Alternativ kann der Zweikomponenten-Klebstoff ein Polyadditionsklebstoff sein, insbesondere aus der Gruppe der Epoxiharzklebstoffe oder Polyurethanklebstoffe.

Der Zweikomponenten-Klebstoff kann insbesondere thixotrope Eigenschaften aufweisen. Thixotropie bezeichnet die Eigenschaft eines Nicht-Newtonschen Fluids, bei einer konstanten Scherung über eine Zeitdauer hinweg die Viskosität abzubauen. Nach Aussetzen der Scherbeanspruchung wird die Ausgangsviskosität wieder aufgebaut. Vereinfacht ausgedrückt bedeutet dies, je länger ein thixotropes Fluid gerührt wird, desto dünnflüssiger wird es.

Vorzugsweise kann der Zweikomponenten-Klebstoff niederviskos, insbesondere mit einer Viskosität zwischen 1,5 ∗ 10³ (1.500) und 5 ∗ 10⁵ (500.000) Millipascalsekunden (mPa s) ausgebildet sein.

Vorzugsweise kann der Zweikomponenten-Klebstoff nach seiner Aushärtung eine Dehnbarkeit zwischen 1 und 4 Millimeter (mm), insbesondere 2,5 Millimeter (mm) aufweisen. Die Dehnbarkeit definiert die Eigenschaft, wie das Material unter Krafteinwirkung seine Form zu verändern vermag. Die Dehnbarkeit gibt an, wie weit ein Material verlängert werden kann, ohne dass er bricht oder reißt. Die Dehnbarkeit beschreibt demgemäß die elastische Verformbarkeit des Material, hier des Zweikomponenten-Klebstoffs.

Der Zweikomponenten-Klebstoff weist erfindungsgemäß nach seiner Aushärtung eine Shore-D-Härte zwischen 55 und 75, insbesondere von 65, auf. Die Shore-Härte ist ein Werkstoffkennwert für Kunststoffe und insbesondere Elastomere der in den Normen DIN 53505 und DIN 7868 definiert ist. Das Kernstück des Shore-Härte-Prüfers besteht aus einem federbelasteten Stift aus gehärtetem Stahl. Dessen Eindringtiefe in das zu prüfende Material ist ein Maß für die entsprechende Shore-Härte, die auf einer Skala von 0 Shore bei 2,5 Millimeter Eindringtiefe bis 100 Shore bei Null Millimeter Eindringtiefe gemessen wird. Eine hohe Zahl bedeutet eine große Härte. Bei der Shore-D-Härtemessung wird die zu messende Probe mit einer Kraft von 50 Newton auf einen Messtisch angedrückt. Bei der Bestimmung
der Härte von Kunststoffe und Elastomere spielt die Temperatur eine größere Rolle als bei der Härtebestimmung metallischer Werkstoffe. Deshalb wird bei der Shore-D-Härtemessung eine Solltemperatur zwischen 21 und 25 °C vorgeschrieben. Das zu prüfende Material sollte im Bereich von 0 bis 50 Shore eine Dicke von mindestens 9 Millimetern aufweisen. Bei Materialen mit einer Härte über 50 Shore ist eine Dicke von mindestens 6 Millimeters ausreichend.

Insgesamt wird erfindungsgemäß bevorzugt ein Zweikomponenten-Klebstoff eingesetzt, der beim Auftrag auf die Innenseite der Geräteaußenwand oder die Außenseite des Innenbehälters bzw. auf das Vakuumisolationspaneel sehr niederviskos ist, damit er sich schnell und gleichmäßig vollflächig verteilen kann. Der Zweikomponenten-Klebstoff soll jedoch thixotrop sein, so dass nach dem dünnflüssigen Auftragen der Zweikomponenten-Klebstoff nicht tropft bzw. nicht verlaufen kann. Mit einem solchen Zweikomponenten-Klebstoff können vorzugsweise Schichten mit einer Dicke von 0,4 bis ca. 3mm aufgetragen werden. Nach einem Aushärten des Zweikomponenten-Klebstoffs soll die Klebeschicht so hart sein, eine zusätzliche Versteifung mittels Zusatzblech oder verdickter Geräteaußenwand entfallen kann. Gleichzeitig soll die Klebeschicht elastisch genug sein, um Dehnungen aufnehmen zu können. So können bei Temperaturschwankungen auftretende unterschiedliche Längungen von Vakuumisolationspaneel und Geräteaußenwand kompensiert werden.

Eine Ausführungsform der Erfindung ist an Hand eines in den Figuren beispielhaft dargestellten Kältegeräts für Haushaltszwecke beschrieben. Aus der detaillierten Beschreibung dieses konkreten Ausführungsbeispiels ergeben sich auch weitere generelle Merkmale und Vorteile der vorliegenden Erfindung.

Es zeigen:
- Figur 1: eine perspektivische Ansicht eines Kältegerät für Haushaltszwecke;
- Figur 2: eine explodierte Darstellung des Korpus 2 mit einem zwischengefügten Vakuumisolationspaneel;
- Figur 3: eine Querschnittsansicht durch das Kältegerät 1.

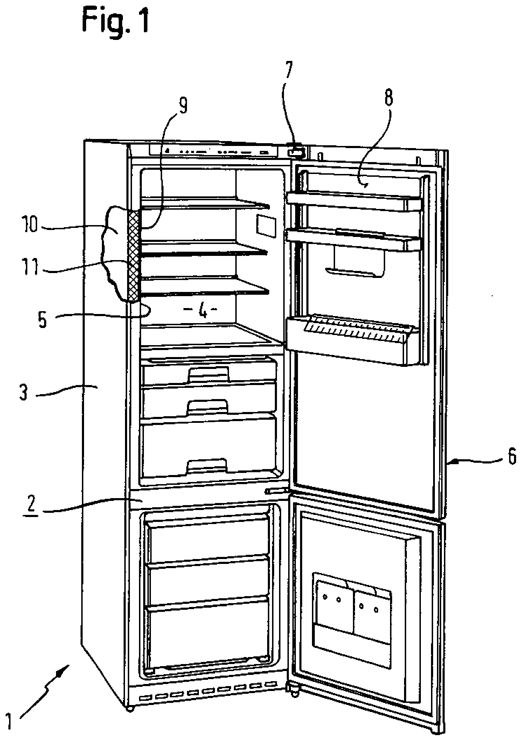

Ein Kältegerät 1 für Haushaltszwecke gemäß Fig. 1 weist einen schrankförmigen Korpus 2, dessen Wände 3 einen Innenraum 4 des Kältegerätes 1 begrenzen. Eine frontseitige Öffnung 5 des Korpus 2 ist mittels einer Tür 6 verschließbar. Die Tür 6 ist über Scharnieranordnungen 7 um eine vertikale Achse schwenkbar an dem Korpus 2 gelagert. Die Tür 6 weist eine in der geschlossenen Position dem Innenraum 4 zugewandte Innenseite 8 auf. In einem zwischen Geräteaußenwand 3 und einem Innenbehälter 9 ausgebildeten Hohlraum 10 ist eine Isolationsschicht 11 zu Wärmeisolationszwecken eingeschäumt.

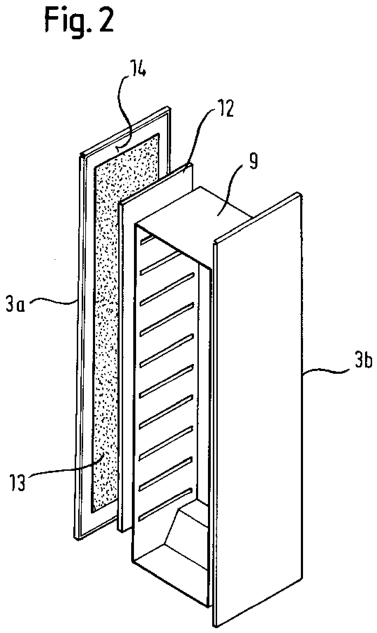

Das Kältegerät 1 aus Fig. 1 ist in Fig. 2 in einer explodierten Darstellung gezeigt. Fig.2 zeigt den Innenbehälter 9 mit zwei gegenüberliegenden seitlichen Geräteaußenwänden 3a und 3b, sowie beispielhaft ein zwischen der in Fig. 2 links dargestellten Geräteaußenwand 3a und dem Innenbehälter 9 angeordnetes Vakuumisolationspaneel 12. Das Vakuumisolationspaneel 12 ist mittels eines Zweikomponenten-Klebstoffes 13 an einer Innenseite 14 der Geräteaußenwand 3a angeklebt.

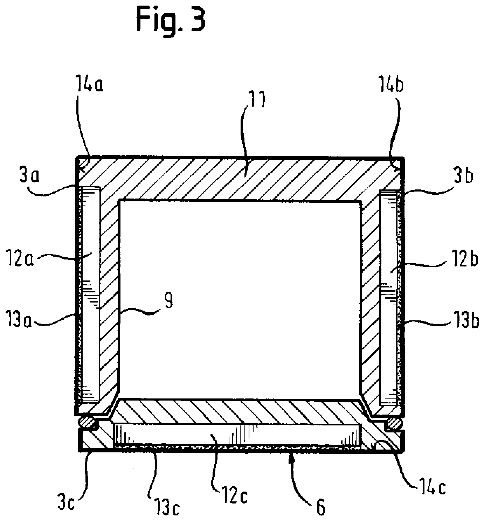

Wie in Fig. 3 in einer Querschnittsansicht durch das Kältegerät 1 gezeigt, kann eine erste Geräteaußenwand 3a durch eine in Fig. 3 links dargestellte Geräteaußenwand 3 gebildet werden. Demgemäß kann eine zweite Geräteaußenwand 3b durch eine in Fig. 3 rechts dargestellte Geräteaußenwand 3 gebildet werden. Eine dritte Geräteaußenwand 3c kann beispielsweise auch von der Tür 6 des Kältegeräts 1 gebildet werden. Zwischen dem Innenbehälter 9 und den Geräteaußenwänden 3a und 3b ist die Isolationsschicht 11 eingeschäumt. Der ersten Geräteaußenwand 3a ist ein erstes Vakuumisolationspaneel 12a zugeordnet. Das erste Vakuumisolationspaneel 12a ist im Bereich der Innenseite 14a der Geräteaußenwand 3a angeordnet. Das Vakuumisolationspaneel 12a ist mittels einer ersten Zweikomponenten-Klebstoffschicht 13a an die Innenseite 14a der ersten Geräteaußenwand 3a angeklebt. Der zweiten Geräteaußenwand 3b ist ein zweites Vakuumisolationspaneel 12b zugeordnet. Das zweite Vakuumisolationspaneel 12b ist im Bereich der Innenseite 14b der Geräteaußenwand 3b angeordnet. Das Vakuumisolationspaneel 12b ist mittels einer zweiten Zweikomponenten-Klebstoffschicht 13b an die Innenseite 14b der zweiten Geräteaußenwand 3b angeklebt. Eine dritte Geräteaußenwand 3c ist an der Tür 6 ausgebildet. Dieser türseitigen dritten Geräteaußenwand 3c ist ein drittes Vakuumisolationspaneel 12c zugeordnet. Das dritte Vakuumisolationspaneel 12c ist im Bereich der Innenseite 14c der Geräteaußenwand 3c angeordnet. Das Vakuumisolationspaneel 12c ist mittels einer dritten Zweikomponenten-Klebstoffschicht 13c an die Innenseite 14c der dritten Geräteaußenwand 3c angeklebt.

## Patentansprüche

1. Haushaltsgerät, insbesondere Kältegerät (1), aufweisend einen Korpus (2) mit einem Innenbehälter (9) und Geräteaußenwänden (3, 3a, 3b, 3c), sowie einer dazwischen liegenden Isolationsschicht (11) mit mindestens einem eingelagerten Vakuumisolationspaneel (12, 12a, 12b, 12c), **dadurch gekennzeichnet, dass** das mindestens eine Vakuumisolationspaneel (12, 12a, 12b, 12c) mittels eines Zweikomponenten-Klebstoffes (13) flächig nur an einer Innenseite einer Geräteaußenwand (3, 3a, 3b, 3c) angeklebt ist und das Vakuumisolationspaneel (12, 12a, 12b, 12c) durch die Isolationsschicht (11) beabstandet zu einer Außenseite einer dieser Innenseite gegenüberliegenden Wand des Innenbehälters (9) angeordnet ist oder das mindestens eine Vakuumisolationspaneel (12, 12a, 12b, 12c) mittels eines Zwei-Komponenten-Klebstoffs (13) flächig wenigstens nur an einer Außenseite einer Wand des Innenbehälters (9) angeklebt ist und das Vakuumisolationspaneel (12, 12a, 12b, 12c) durch die Isolationsschicht (11) beabstandet zu einer Innenseite einer Geräteaußenwand (3, 3a, 3b, 3c) angeordnet ist und, dass der Zweikomponenten-Klebstoff (13) nach seiner Aushärtung eine Shore-D-Härte zwischen 55 und 75 aufweist.

2. Haushaltsgerät nach Anspruch 1, **dadurch gekennzeichnet, dass** der Zweikomponenten-Klebstoff (13) sich vollflächig zwischen Vakuumisolationspaneel (12, 12a, 12b, 12c) und Innenseite (14) der Geräteaußenwand (3, 3a, 3b, 3c) oder der Außenseite des Innenbehälters erstreckt.

3. Haushaltsgerät nach Anspruch 1 oder 2, **dadurch gekennzeichnet, dass** der Zweikomponenten-Klebstoff (13) eine Schicht mit einer Schichtdicke von 0,4 mm bis 3 mm bildet.

4. Haushaltsgerät nach einem der Ansprüche 1 bis 3, **dadurch gekennzeichnet, dass** der Zweikomponenten-Klebstoff (13) ein Polykondensationsklebstoff ist, insbesondere aus der Gruppe der Phenolformaldehydklebstoffe, Silikonklebstoffe, Silan-vernetzende Polymerklebstoffe oder Polyimidklebstoffe.

5. Haushaltsgerät nach einem der Ansprüche 1 bis 3, **dadurch gekennzeichnet, dass** der Zweikomponenten-Klebstoff (13) ein Polyadditionsklebstoff ist, insbesondere aus der Gruppe der Epoxiharzklebstoffe oder Polyurethanklebstoffe.

6. Haushaltsgerät nach einem der Ansprüche 1 bis 5, **dadurch gekennzeichnet, dass** der Zweikomponenten-Klebstoff (13) thixotrope Eigenschaften aufweist.

7. Haushaltsgerät nach einem der Ansprüche 1 bis 6, **dadurch gekennzeichnet, dass** der Zweikomponenten-Klebstoff (13) niederviskos, insbesondere mit einer Viskosität zwischen 1,5 ^{∗} 10³ und 5 ^{∗} 10⁵ Millipascalsekunden (mPa s) ausgebildet ist.

8. Haushaltsgerät nach einem der Ansprüche 1 bis 7, **dadurch gekennzeichnet, dass** der Zweikomponenten-Klebstoff (13) nach seiner Aushärtung eine Dehnbarkeit zwischen 1 und 4 Millimeter (mm), insbesondere 2,5 Millimeter (mm) aufweist.

9. Haushaltsgerät nach einem der Ansprüche 1 bis 8, **dadurch gekennzeichnet, dass** der Zweikomponenten-Klebstoff (13) nach seiner Aushärtung eine Shore-D-Härte von 65 aufweist.

## Claims

1. Household appliance, particularly a refrigeration appliance (1), having a body (2) with an inner container (9) and appliance external walls (3, 3a, 3b, 3c), as well as a layer of insulation (11) therebetween, with at least one inlaid vacuum insulation panel (12, 12a, 12b, 12c), **characterised in that** the at least one vacuum insulation panel (12, 12a, 12b, 12c) is glued by means of a two-component adhesive (13) in a planar manner only to an inner side of an appliance external wall (3, 3a, 3b, 3c) and the vacuum insulation panel (12, 12a, 12b, 12c), due to the layer of insulation (11), is arranged at a distance from an outer side of a wall of the inner container (9) that lies opposite said inner side or the at least one vacuum insulation panel (12, 12a, 12b, 12c) is glued by means of a two-component adhesive (13) in a planar manner at least only to an outer side of a wall of the inner container (9) and the vacuum insulation panel (12, 12a, 12b, 12c), due to the layer of insulation (11), is arranged at a distance from an inner side of an appliance external wall (3, 3a, 3b, 3c), and that the two-component adhesive (13), after it has hardened, has a Shore-D hardness of between 55 and 75.

2. Household appliance according to claim 1, **characterised in that** the two-component adhesive (13) extends over the full surface between vacuum insulation panel (12, 12a, 12b, 12c) and inner side (14) of the appliance external wall (3, 3a, 3b, 3c) or the outer side of the inner container.

3. Household appliance according to claim 1 or 2, **characterised in that** the two-component adhesive (13) forms a layer with a layer thickness from 0.4 mm to 3 mm.

4. Household appliance according to one of claims 1 to 3, **characterised in that** the two-component adhesive (13) is a polycondensation adhesive, especially from the group phenol formaldehyde adhesives, silicon adhesives, silane crosslinking polymer adhesives or polyimide adhesives.

5. Household appliance according to one of claims 1 to 3, **characterised in that** the two-component adhesive (13) is a poly-addition adhesive, especially from the group of epoxy resin adhesives or polyurethane adhesives.

6. Household appliance according to one of claims 1 to 5, **characterised in that** the two-component adhesive (13) has thixotropic properties.

7. Household appliance according to one of claims 1 to 6, **characterised in that** the two-component adhesive (13) is embodied as a low-viscosity adhesive, especially with a viscosity between 1.5 ^{∗} 10³ and 5 ^{∗} 10⁵ millipascal seconds (mPa s).

8. Household appliance according to one of claims 1 to 7, **characterised in that** the two-component adhesive (13), after it has hardened, has an expandability of between 1 and 4 millimetres (mm), especially 2.5 millimetres (mm).

9. Household appliance according to one of claims 1 to 8, **characterised in that** the two-component adhesive (13), after it has hardened, has a Shore-D hardness of 65.

## Revendications

1. Appareil ménager, notamment appareil frigorifique (1), présentant un corps (2) doté d'un réservoir intérieur (9) et de parois d'appareil extérieures (3, 3a, 3b, 3c) ainsi que d'une couche d'isolation (11) située entre celles-ci, comprenant au moins un panneau d'isolation sous vide (12, 12a, 12b, 12c) intercalé, **caractérisé en ce que** l'au moins un panneau d'isolation sous vide (12, 12a, 12b, 12c) est collé en surface seulement sur un côté intérieur d'une paroi d'appareil extérieure (3, 3a, 3b, 3c) au moyen d'une colle à deux composants (13) et **en ce que** le panneau d'isolation sous vide (12, 12a, 12b, 12c), en raison de la couche d'isolation (11), est disposé à distance d'un côté extérieur d'une paroi du réservoir intérieur (9), opposée à ce côté intérieur, ou **en ce que** l'au moins un panneau d'isolation sous vide (12, 12a, 12b, 12c) est collé en surface au moins seulement sur un côté extérieur d'une paroi du réservoir intérieur (9) au moyen d'une colle à deux composants (13), et **en ce que** le panneau d'isolation sous vide (12, 12a, 12b, 12c), en raison de la couche d'isolation (11), est disposé à distance d'un côté intérieur d'une paroi d'appareil extérieure (3, 3a, 3b, 3c), et **en ce que** la colle à deux composants (13) présente une dureté Shore D comprise entre 55 et 75 après son durcissement.

2. Appareil ménager selon la revendication 1, **caractérisé en ce que** la colle à deux composants (13) s'étend sur toute la surface entre le panneau d'isolation sous vide (12, 12a, 12b, 12c) et le côté intérieur (14) de la paroi d'appareil extérieure (3, 3a, 3b, 3c) ou le côté extérieur du réservoir intérieur.

3. Appareil ménager selon la revendication 1 ou 2, **caractérisé en ce que** la colle à deux composants (13) forme une couche ayant une épaisseur de couche de 0,4 mm à 3 mm.

4. Appareil ménager selon l'une quelconque des revendications 1 à 3, **caractérisé en ce que** la colle à deux composants (13) est une colle à polycondensation, notamment provenant du groupe des colles à phénol-formaldéhyde, des colles à base de silicone, des colles polymères réticulées de silane ou des colles polyimides.

5. Appareil ménager selon l'une quelconque des revendications 1 à 3, **caractérisé en ce que** la colle à deux composants (13) est une colle à polyaddition, notamment provenant du groupe des colles à résine époxy ou des colles à polyuréthanne.

6. Appareil ménager selon l'une quelconque des revendications 1 à 5, **caractérisé en ce que** la colle à deux composants (13) présente des caractéristiques thixotropes.

7. Appareil ménager selon l'une quelconque des revendications 1 à 6, **caractérisé en ce que** la colle à deux composants (13) est à faible viscosité, notamment **en ce qu'**elle est réalisée avec une viscosité comprise entre 1,5 · 10³ et 5 · 10⁵ milli pascal secondes (mPas).

8. Appareil ménager selon l'une quelconque des revendications 1 à 7, **caractérisé en ce que** la colle à deux composants (13) présente une élasticité comprise entre 1 et 4 millimètres, notamment de 2,5 millimètres (mm), après son durcissement.

9. Appareil ménager selon l'une quelconque des revendications 1 à 8, **caractérisé en ce que** la colle à deux composants (13) présente une dureté Shore D de 65 après son durcissement.
